# EUROPEAN PATENT APPLICATION

(11) **EP 4 252 942 A1**
(43) Date of publication of application: **04.10.2023**
(21) Application number: 23163653.1
(22) Date of filing: 23.03.2023
(51) Int. Cl.: B23B 39/16, B27C 3/00, B27C 3/04

(54) **MULTIPLE DRILLING UNIT TO DRILL A PANEL**

(30) Priority: 31.03.2022 IT 202200006380
(71) Applicant: SCM Group S.p.A., 47921 Rimini (RN) (IT)
(72) Inventor: VANNUCCI, Carlo, 47921 Rimini (RN) (IT); NERI, Alessandro, 47921 Rimini (RN) (IT)
(74) Representative: Tiburzi, Andrea

(57) **Abstract**

The present invention relates to a multiple drilling unit (2) to drill a panel (P), such as a panel (P) made of wood, plastic, fiberglass and the like, or a product in general, comprising motor means (22) and a plurality of inclined drilling units (34, 35; 34, 35), each arranged in such a way as to make, when operated, a hole on one face (Fs, Fl) of said panel (P), wherein said hole is inclined with respect to the surface of said face (Fs, Fl) of said drilling angle (*α*), wherein said multiple drilling unit (2) is characterized in that it comprises a motion transmission assembly, adapted to transmit the motion from said motor means (22) to said plurality of inclined drilling units (34, 35; 34, 35). The present invention also relates to a working center provided with a multiple drilling unit (2, 2').

## Description

The present invention relates to a multiple drilling unit and a panel drilling machine.

### Field of invention

More specifically, the invention relates to a multiple drilling unit capable of making a series of inclined holes, designed and built for optimal transmission of the mode, which allows the selective activation of the drilling bits.

In the following, the description will be directed to a drilling unit intended to be installed on a machine or work center for machining wooden panels, but it is clear that it should not be considered limited to this specific use.

### Prior art

As is well known, there are currently machines or machining centers for drilling panels. In particular, in the construction of furniture in general, wooden panels are used, which, as is known, must be drilled for the introduction of pins or nuts, necessary for coupling the different panels for the construction of the frame of the furniture itself.

In general, the holes have an axis of symmetry perpendicular to the surface on which they are made, or inclined with respect to the same surface, which can be, for example, a narrow side of the panel, i.e., a lateral face. The creation of inclined holes is in particular aimed at inserting pins, for a more stable coupling over time between panels in the creation of frames for furniture.

Working centers or machines are also well known in the field, which allow, in some stages, to make a series of holes for example on a side face of a panel. Naturally, the sequence of the holes can be different from panel to panel, or from machining to machining.

In the industry, therefore, the need is felt to be able to make distinct sequences of holes, possibly with a single group, to speed up the machining steps of the machine.

A technical problem met in the construction of working center machines in the terms indicated above is the fact that each spindle, which houses a drill bit should have a specific actuator for its movement and actuation. This evidently entails a considerable design complication of the drilling assembly, with the consequent increase in production costs.

It is clear that this procedure is costly in economic terms, especially in the case of large-scale mass production of panels.

### Scope of the invention

In light of the above, it is, therefore, an object of the present invention to propose a drilling unit capable of making inclined holes, in which each drilling bit, or each relative spindle, can be operated independently of the others, and which can be at the same time economically advantageous in construction, design and production terms.

Another object of the invention is to propose a drilling unit, which is capable of making inclined holes in a selective manner.

Another object of the present invention is to propose a machine or working center for working panels, which includes an innovative drilling unit with independently operable drill bits.

### Object of the invention

It is, therefore, specific object of the present invention a multiple drilling unit to drill a panel, such as a panel made of wood, plastic, fiberglass and the like, or a product in general, comprising motor means and a plurality of inclined drilling units, each arranged in such a way as to make, when operated, a hole on one face of said panel, wherein said hole is inclined with respect to the surface of said face of said drilling angle, wherein said multiple drilling unit is characterized in that it comprises a motion transmission assembly, adapted to transmit the motion from said motor means to said plurality of inclined drilling units.

Always according to the invention, each of said drilling units may comprise: a body; and a driving toothed wheel arranged on said body; and said motion transmission assembly is capable of transmitting the motion from said motor means to said driving toothed wheel of said inclined drilling units.

Still according to the invention, said motion transmission assembly may comprise transmission members, connected to said motor means, and a plurality of transmission toothed wheels, wherein one of said transmission toothed wheels is coupled to said transmission members, wherein one of said transmission sprockets is directly or indirectly engaged to said motor means, and wherein each transmission toothed wheels are engaged to at least one respective driving toothed wheel of an inclined drilling unit.

Advantageously according to the invention, said transmission toothed wheels may be engaged with each other.

Further according to the invention, each transmission toothed wheel may be arranged to transmit the motion to a driving toothed wheel, and each driving toothed wheel is arranged to transmit the motion to a further transmission toothed wheel.

Preferably according to the invention, said drilling units may be selectively selectable.

Always according to the invention, said multiple drilling unit may comprise a plurality of selectively selectable straight drilling unit, arranged so as to make a hole substantially perpendicular to the surface of a face of said panel, wherein each straight drilling unit comprises a body having a driving tooted wheel, and said motion transmission assembly may comprise transmission members, connected to said motor means, and a plurality of skewed transmission wheels, arranged in series, each engaged to a respective driving toothed wheel of an inclined drilling unit, and to a respective drive gear wheel of a straight drilling unit, wherein at least one of said driving wheel of an inclined drilling unit is coupled to said transmission members.

Still according to the invention, each inclined drilling unit may comprise: a spindle; a drill installed on said spindle; and an actuator for allowing said inclined drilling unit to pass from a retracted position to an extracted position, to allow the drilling of a panel.

Advantageously according to the invention, said actuator of said inclined drilling unit may comprise an inlet port, connectable to a source of compressed air, a support frame, a piston, slidingly coupled to said body and linearly movable following the action of compressed air, coupled to said spindle, and a return spring, interposed between said support frame and said piston.

Further according to the invention, each straight drilling unit may comprise: a spindle; a drill bit installed on said spindle; and an actuator for allowing said rectilinear drilling unit to pass from a retracted position to an extracted position, to allow drilling of a panel.

Preferably according to the invention, said actuator of each straight drilling unit may comprise: an inlet door, connectable to a compressed air source; a support frame; a piston, slidingly coupled to said body and linearly movable following the action of the compressed air, coupled to said spindle, and a return spring, interposed between said support frame and said piston.

It is a further object of the present invention a working center comprising a frame, a working plane, on which a panel to be machined, a crossbar, on which a machining head is arranged comprising at least one multiple drilling unit as defined above, arranged to drill the upper surface and/or a side surface of said panel, wherein said machining head and said working plane are relatively movable with respect to each other in one, and/or two and/or three directions.

Always according to the invention, said working center may comprise a first multiple drilling unit arranged so as to drill the upper face of said panel.

Still according to the invention, said working center may comprise a second multiple drilling unit arranged so as to drill at least one side face of said panel.

### Brief description of the figures

The present invention will be now described, for illustrative but not limitative purposes, according to its preferred embodiments, with particular reference to the figures of the enclosed drawings, wherein:
figure 1 shows a perspective view of a working center for machining panels in which a multiple drilling unit according to the present invention is installed;
figure 2 shows a perspective view of a first embodiment of a multiple drilling unit according to the present invention, positioned to make holes on the upper face;
figure 3 shows a partially open side view of the multiple drilling unit of figure 2;
figure 4 shows a bottom view of the multiple drilling unit of figure 2, positioned so as to make holes on the upper face of a panel;
figure 5 shows a longitudinal section of an inclined drilling unit according to the present invention;
figure 6 shows a top view of a transmission assembly of the multiple drilling unit of figure 2;
figure 7 shows a side view of the transmission assembly of figure 6;
figure 8 shows an open side view of the multiple drilling unit of figure 5 in which some drill bits are active;
figure 9 shows a top view of a second embodiment of a transmission assembly of the multiple drilling unit of figure 2;
figure 10 shows a side view of the transmission assembly of figure 9;
figure 11 shows an open side view of the multiple drilling assembly of figure 2 incorporating the second embodiment of the drive assembly, in which some drill bits are active;
figure 12 shows a perspective view of a third embodiment of a multiple drilling unit according to the present invention; figure 13 shows an open side view of the multiple drilling unit of figure 12;
figure 14 shows a rear view of the multiple drilling unit of figure 12;
figure 15 shows a side view of a transmission assembly of the multiple drilling unit of figure 12;
figure 16 shows a top view of the transmission assembly of figure 12;
figure 17 shows a detail of the transmission assembly of figure 12;
figure 18 shows an open side view of a vertically arranged multiple drilling unit, which has a few activated drill bits; and
figure 19 shows a horizontally arranged multiple drilling unit.

### Detailed description

In the various figures, similar parts will be indicated with the same reference numbers.

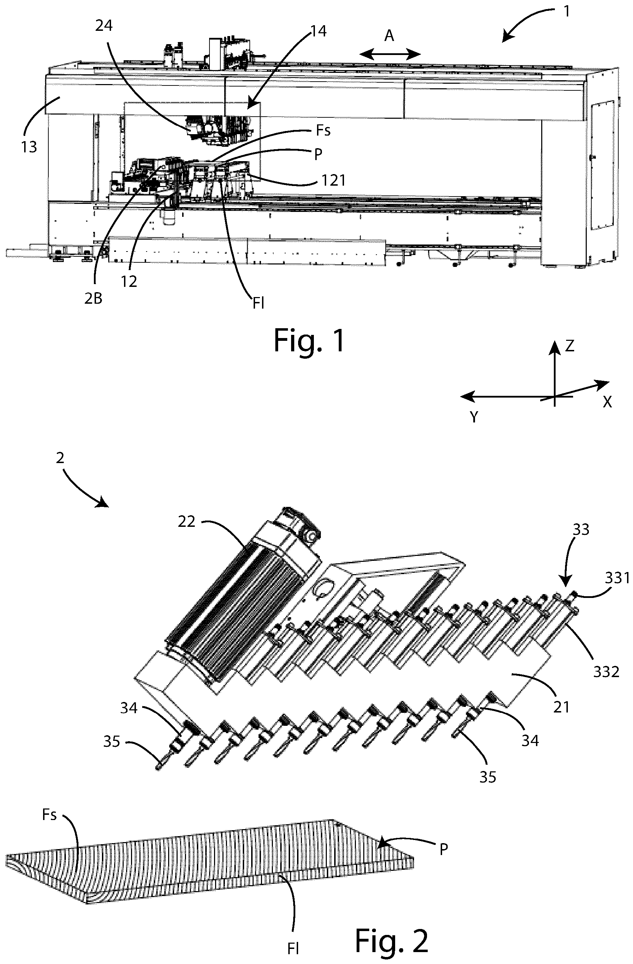

With reference to figure 1, a working center 1 can be seen, comprising a frame 11, a working plane 12, made up of a plurality of bars 121, on which a panel P to be worked can be arranged, a crosspiece 13, on which a machining head 14 moves in sliding along the direction of arrow A, which is arranged parallel to the Y axis of the three Cartesian axes XYZ shown in figure 1.

The machining head 14 can be configured to equip a first drilling unit 2A according to the present invention, arranged to drill the upper surface Fs. Said first drilling unit 2A is arranged so that it can make one or more holes simultaneously on said upper surface Fs of the panel P arranged on the working plane 12.

Furthermore, the working center 1 also equips a second multiple drilling unit 2B, arranged horizontally, to make holes always inclined on a side face FI of the panel P.

In this way, it is possible to make one or more inclined holes on the upper surface Fs or one of the side surfaces FI of a panel P arranged and blocked on the working plane 12.

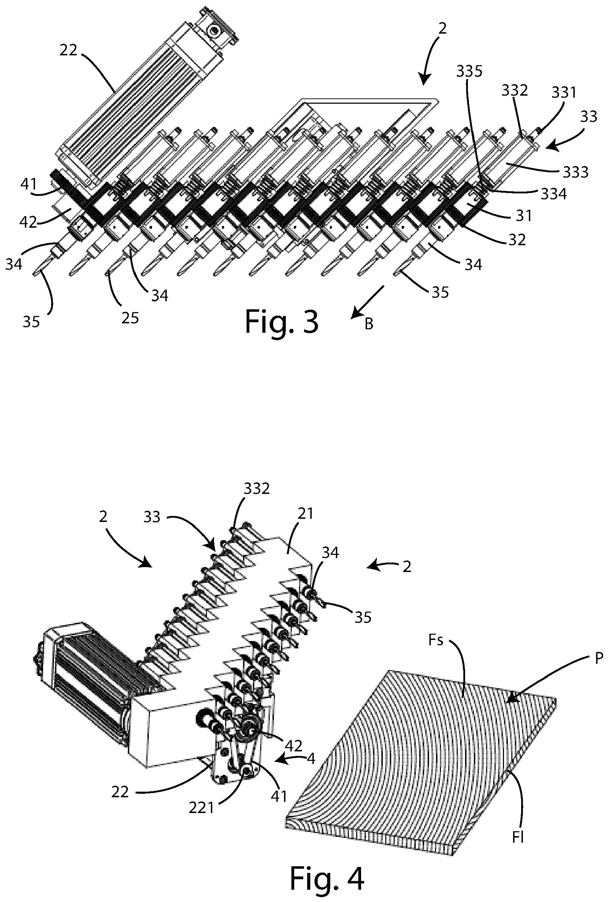

A first embodiment of the multiple drilling unit 2 according to the present embodiment is shown in figures 2, 3, 4, and 5 and comprises, in particular, a containment casing 21, an electric motor 22, or drive motor means, the operation of which will be better clarified below, and a plurality of inclined drilling units 3, arranged in series, so as to form an array, and partially housed in said containment casing 21. Said inclined drilling units 3 are arranged to make a hole on one face Fs or FI of said panel P, inclined with respect to the surface of said face by a drilling angle *α*. Said drilling angle *α* can be between 30° and 60°, or preferably equal to 45°. Obviously, other inclinations can be foreseen for this drilling angle *α.*

Furthermore, the multiple drilling unit 2 also comprises a motion transmission assembly 4, arranged inside the containment casing 21, which allows the motion to be transmitted from said electric motor 22 to the inclined drilling units 3, as better explained in the following.

Each inclined drilling unit 3 comprises a body 31, a driving toothed wheel 32, arranged, in the present embodiment, around said body 31, and a linear actuator 33, which in the present embodiment is of pneumatic type, having an inlet port 331 for compressed air, which can be connected to a source of compressed air, a support frame 332, fixed to said containment casing 21, a jacket 333, inside which a piston 335 can slide, movable linearly following the action of compressed air, and a return spring 334.

The drilling unit 3 also comprises a mandrel 34, coupled to one end of the piston 335 of the linear actuator 33. The piston 335 is slidingly coupled to said body 31. A drilling bit 35 is installed on each mandrel 34.

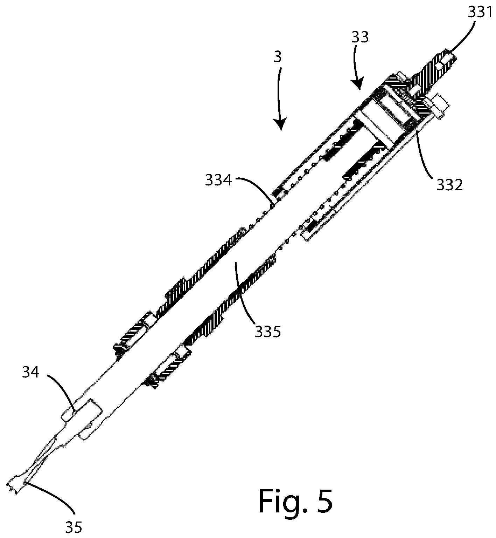

The return spring 334 is interposed between the containment casing 21 and the piston 335 (to which the mandrel 34 is coupled), as can be seen in particular in figure 5. The piston 335 can thus assume a retracted position, and therefore is the respective mandrel 34 (and the relative drilling bit 35) to which it is coupled is retracted. In this position, the return spring 334 is in the rest position. The piston 335 can also assume an extracted position, in which, following the introduction of compressed air into the inlet port 331, it is moved linearly, allowing said mandrel 34 to be extracted, moving in the direction of arrow B to carry out a hole on the panel P. At the same time, the return spring 334 is extended, exerting a return force, suitable for returning the piston 335 to the retracted position at the end of the compressed air supply. During said extracted position, the spindle continues to be driven by the electric motor 22.

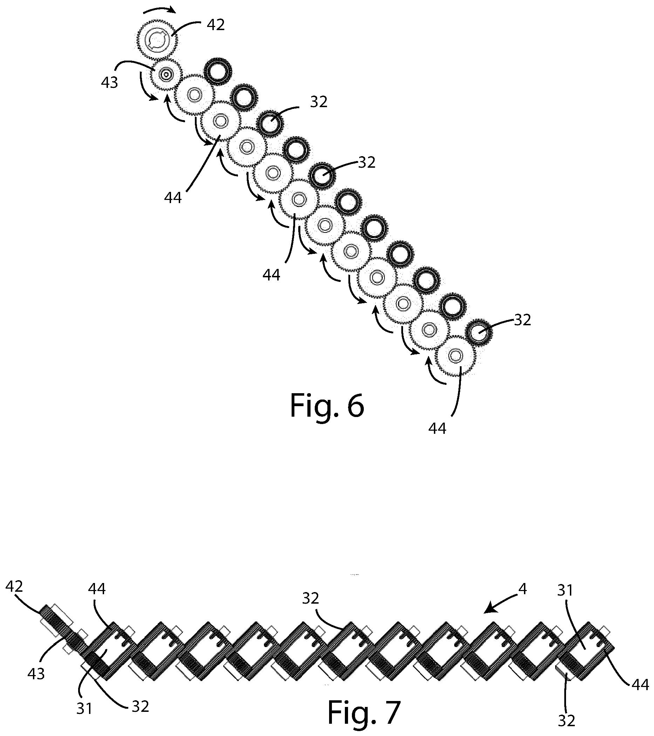

With reference also to figures 6, 7, and 8, a first embodiment of a transmission assembly 4 can be observed, for the transmission of the driving force of the electric motor 22 to the spindles 34 of each inclined drilling unit 3. The transmission assembly 4 comprises a toothed wheel 41, keyed to the transmission shaft 221 of the electric motor 22, a guide wheel 42, engaged with the gear wheel 41, a transmission pinion 43, which transmits motion to a series of transmission toothed wheels 44, engaged with each other in series, and which therefore alternately rotate in the opposite direction.

Each transmission toothed wheels 44 is engaged with a respective drive sprocket 32 of an inclined drilling unit 3, so as to transmit to it the rotary motion coming from the electric motor 22, by rotating said inclined drilling unit 3.

The operation of the multiple drilling unit 2 described above is as follows.

When the electric motor 22 is operated, the transmission assembly 4 allows the driving force generated to be transmitted to the inclined drilling units 3, in particular, by transmitting it between the transmission sprockets 44 and the driving toothed wheel 32.

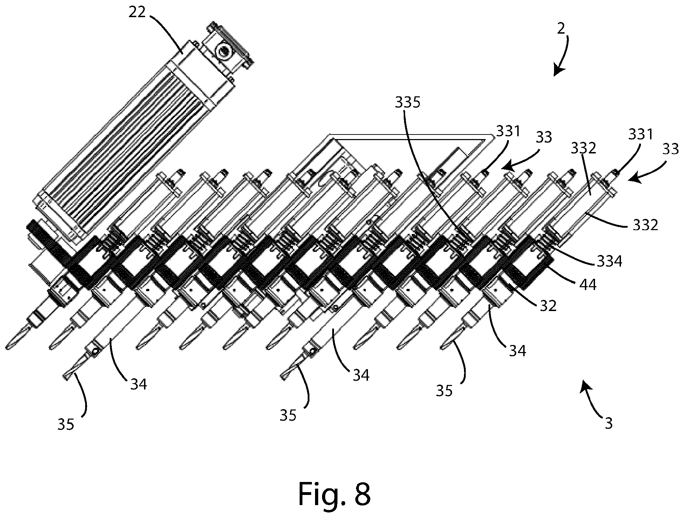

In the event that it is necessary to make one or more holes on one face of a panel P, as can be seen in figure 8, two inclined drilling units 3 are actuated, by introducing compressed air into the respective inlet ports 331, causing the linear movement of the respective piston 335, overcoming the return force of the respective return spring 334, and making the respective spindle 34 pass from the retracted position to the extracted one, to make the hole in panel P, thanks to the driving force supplied to the driving toothed wheel 32.

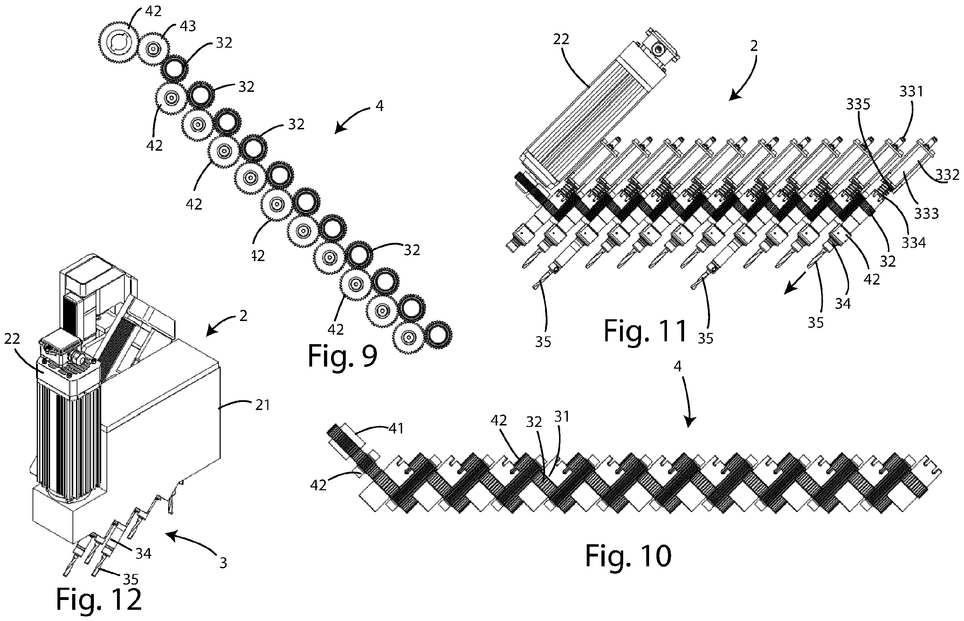

Finally, with reference to figures 9, 10, and 11, a second embodiment of the transmission assembly 4 can be observed, in which in this case, unlike the first embodiment, of which it has substantially the same structure, the transmission toothed wheels 44 are not meshed with each other, but with the driving toothed wheel 32 of each inclined drilling unit 3. As can be seen, the driving toothed wheel 32 are interposed between the driving toothed wheels 44, such that each driving toothed wheel 32 is engaged with two consecutive drive wheels 44.

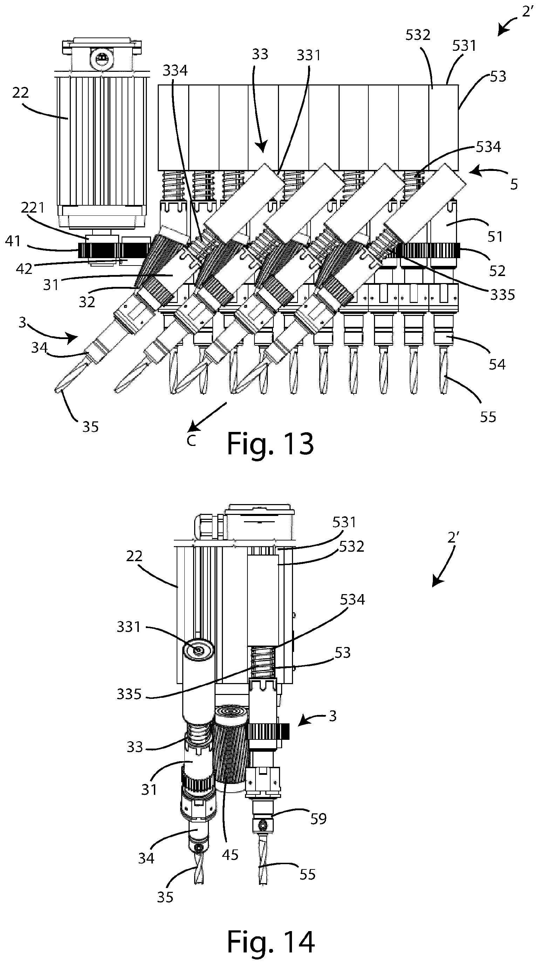

With reference now to figures 12, 13, and 14, a third embodiment of the multiple drilling unit 2' according to the present invention is shown. In particular, in the present case, the multiple drilling unit 2' comprises a first series or array of inclined drilling units 3 arranged at an angle *α*, and a second array of straight drilling units 5 arranged vertically with respect to the surface to be drilled.

The inclined drilling units 3 of the multiple drilling unit 2' according to the present embodiment are completely similar to those of the first multiple drilling unit 2 according to the first embodiment.

Also, the straight drilling units 5 arranged vertically are similar, individually, to the inclined drilling units 3, as their operation is similar.

Each straight drilling unit 5 comprises a body 51, a driving tooted wheel 52 arranged on said body 51, and a linear actuator 53, having a compressed air inlet port 531, into which compressed air can be introduced, a support frame 532, fixed to said containment casing 21, a sleeve 533 and a piston 335, movable linearly following the action of the compressed air, and a return spring 534.

The straight drilling unit 5 also comprises a spindle 54, coupled to the linear actuator 53 and slidingly movable with respect to said body 51. A drill bit 55 is installed on each spindle 54, the return spring 534 is interposed between the frame support 532 and the mandrel 54.

The actuator 33 is configured to assume a retracted position, in which it holds the piston 535 retracted, while the return spring 534 is at rest. In this configuration, the respective mandrel 54 (and the relative drilling bit 55) to which it is coupled, is retracted. The actuator 33 can also assume an extracted position, in which, following the introduction of compressed air into the inlet port 531, the return force of the return spring 534 is overcome, moving the piston 535 linearly, and allows said mandrel 54 to be extracted, moving in the direction of arrow C to make a hole in the panel P.

The straight drilling units 5 are arranged parallel and side by side each other, so that the driving toothed wheel 52 of each straight drilling unit 5 is engaged with the driving toothed wheel 52 of the straight drilling unit or units 5 arranged side by side.

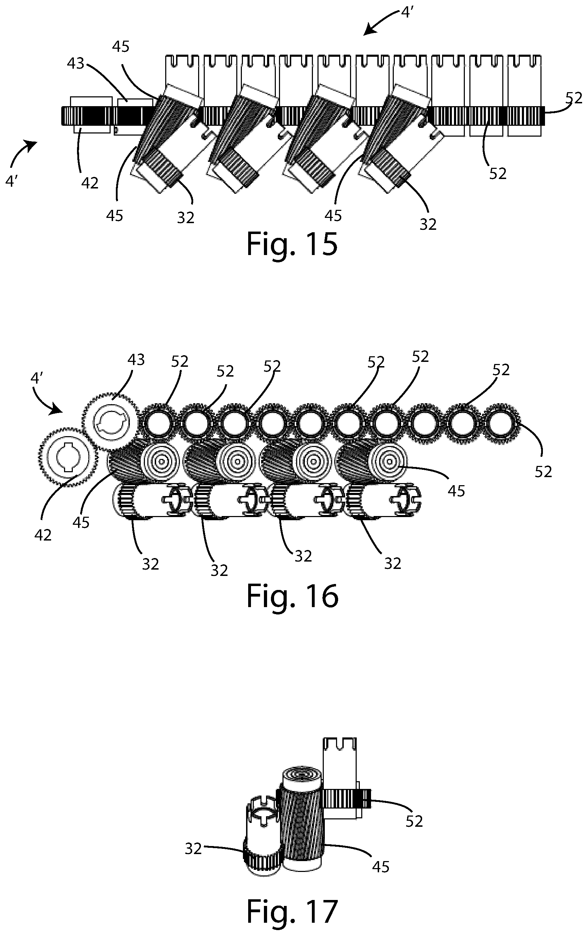

The multiple drilling unit 2 also comprises a transmission assembly 4', which comprises, as can be seen with reference to figures 15, 16, and 17, a plurality of skewed transmission wheels 45, arranged in series, each engaged to a respective drive toothed wheel 32 of an inclined drilling unit 3, and to a respective vertical driving toothed wheel 52.

In this way, the motion transmitted by the electric motor 22, transmitted by the guide 42, and the pinion 43 drives the driving toothed wheel 52 of the first straight drilling unit 5, and thus causing the other straight drilling units 5 to rotate, the wheels of skew transmission wheel 45 and the inclined drilling units 3, by means of the relative driving toothed wheel 32.

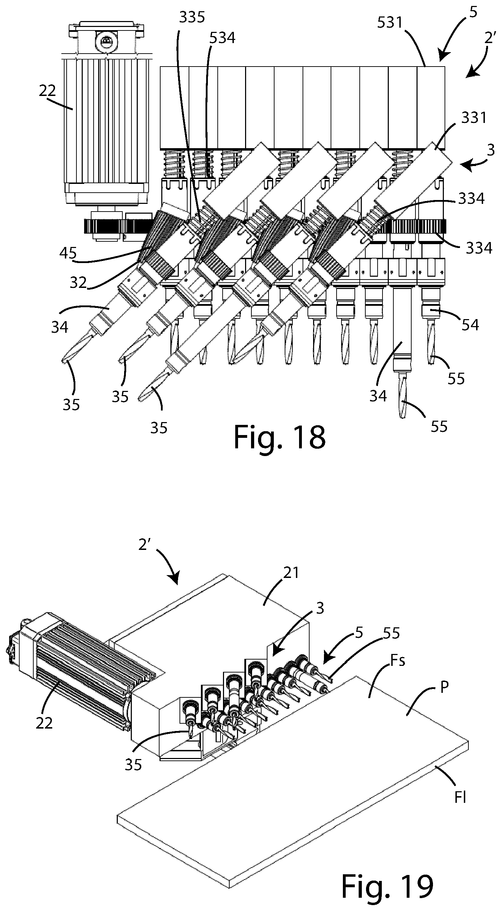

In this case, therefore, with reference to figures 18 and 19, when the electric motor 22 is activated, thanks to the transmission assembly 4', and in particular to the skew transmission wheels 45, both the inclined drilling units 3, and the straight drilling units 5, which can therefore, if operated by compressed air, drill the panel respectively according to the drilling angle *α* or perpendicularly.

To operate one or more of the inclined drilling units 3 or one or more of the straight drilling units 5, compressed air is introduced into one of the inlet ports 331 of the inclined drilling units 3, or one of the inlet ports 531 of the units drilling holes 5, as seen in figure 18, which shows a multiple drilling unit 2' arranged vertically.

The operation of the multiple drilling unit 2' shown in figure 15 is similar, which is arranged horizontally.

### Advantages

An advantage of the present invention is that it allows selective inclined drilling.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Multiple drilling unit (2, 2') to drill a panel (P), such as a panel (P) made of wood, plastic, fiberglass and the like, or a product in general, comprising
motor means (22) and
a plurality of inclined drilling units (3), each arranged in such a way as to make, when operated, a hole on one face (Fs, FI) of said panel (P), wherein said hole is inclined with respect to the surface of said face (Fs, FI) of said drilling angle (*α*),
wherein said multiple drilling unit (2, 2') is **characterized in that** it comprises a motion transmission assembly (4, 4'), adapted to transmit the motion from said motor means (22) to said plurality of inclined drilling units (3).

2. Multiple drilling unit (2, 2') according to the preceding claim, **characterized**
**in that** each of said drilling units (3) comprises:
a body (31); and
a driving toothed wheel (32) arranged on said body (31); and
**in that** said motion transmission assembly (4, 4') is capable of transmitting the motion from said motor means (22) to said driving toothed wheel (32) of said inclined drilling units (3).

3. Multiple drilling unit (2, 2') according to any one of the preceding claims, **characterized in that** said motion transmission assembly (4) comprises
transmission members (41, 42, 43), connected to said motor means (22), and
a plurality of transmission toothed wheels (44),
wherein one of said transmission toothed wheels (44) is coupled to said transmission members (41, 42, 43),
wherein one of said transmission toothed wheels (44) is directly or indirectly engaged to said motor means (22), and
wherein each transmission toothed wheels (44) are engaged to at least one respective driving toothed wheel (32) of an inclined drilling unit (3).

4. Multiple drilling unit (2, 2') according to the preceding claim, **characterized in that** said transmission toothed wheels (44) are engaged with each other.

5. Multiple drilling unit (2, 2') according to claim 3, **characterized in that** each transmission toothed wheel (44) is arranged to transmit the motion to a driving toothed wheel (32), and each driving toothed wheel (32) is arranged to transmit the motion to a further transmission toothed wheel (44).

6. Multiple drilling unit (2, 2') according to any one of the preceding claims, **characterized in that** said drilling units (3) are selectively selectable.

7. Multiple drilling unit (2, 2') according to any one of the preceding claims, **characterized**
**in that** it comprises a plurality of selectively selectable straight drilling unit (5), arranged so as to make a hole substantially perpendicular to the surface of a face (Fs, FI) of said panel (P), wherein each straight drilling unit (5) comprises a body (51) having a driving tooted wheel (52), and
**in that** said motion transmission assembly (4) comprises
transmission members (41, 42, 43), connected to said motor means (22), and
a plurality of skewed transmission wheels (45), arranged in series, each engaged to a respective driving toothed wheel (32) of an inclined drilling unit (3), and to a respective drive gear wheel (52) of a straight drilling unit (5),
wherein at least one of said driving wheel (32) of an inclined drilling unit (3) is coupled to said transmission members (41, 42, 43).

8. Multiple drilling unit (2, 2') according to any one of the preceding claims, **characterized in that** each inclined drilling unit (3) comprises:
a spindle (34);
a drill (35) installed on said spindle (34); and
an actuator (33) for allowing said inclined drilling unit (3) to pass from a retracted position to an extracted position, to allow the drilling of a panel (P).

9. Multiple drilling unit (2, 2') according to the preceding claim, **characterized in that** said actuator (33) of said inclined drilling unit (3) comprises
an inlet port (331), connectable to a source of compressed air,
a support frame (332),
a piston (335), slidingly coupled to said body (31) and linearly movable following the action of compressed air, coupled to said spindle (34), and
a return spring (334), interposed between said support frame (332) and said piston (335).

10. Multiple boring unit (2') according to the preceding claim, when dependent on claim 7, **characterized in that** each straight drilling unit (5) comprises:
a spindle (54);
a drill bit (55) installed on said spindle (34); and
an actuator (53) for allowing said rectilinear drilling unit (5) to pass from a retracted position to an extracted position, to allow drilling of a panel (P).

11. Multiple drilling unit (2') according to the preceding claim, **characterized in that** said actuator (53) of each straight drilling unit (5) comprises:
an inlet door (531), connectable to a compressed air source;
a support frame (532);
a piston (535), slidingly coupled to said body (51) and linearly movable following the action of the compressed air, coupled to said spindle (54), and
a return spring (534), interposed between said support frame (532) and said piston (535).

12. Working center (1) comprising
a frame (11),
a working plane (12), on which a panel to be machined (P),
a crossbar (13), on which a machining head (14) is arranged comprising at least one multiple drilling unit (2A, 2B) according to any one of claims 1-11, arranged to drill the upper surface (Fs) and/or a side surface (FI) of said panel (P),
wherein said machining head (14) and said working plane (12) are relatively movable with respect to each other in one, and/or two and/or three directions.

13. Working center (1) according to the preceding claim, **characterized in that** it comprises a first multiple drilling unit (2A) arranged so as to drill the upper face (Fs) of said panel (P).

14. Working center (1) according to any one of claims 12 or 13, **characterized in that** it comprises a second multiple drilling unit (2B) arranged so as to drill at least one side face (FI) of said panel (P).
